# EUROPEAN PATENT APPLICATION

(11) **EP 3 597 940 A1**
(43) Date of publication of application: **22.01.2020**
(21) Application number: 18275104.0
(22) Date of filing: 20.07.2018
(51) Int. Cl.: F15B 15/14, E05B 51/02

(54) **LOCKING MECHANISM**

(71) Applicant: Goodrich Actuation Systems Limited, West Midlands B90 4SS (GB)
(72) Inventor: TIMMS, Jack William, Wolverhampton, West Midlands WV9 5DT (GB)
(74) Representative: Dehns

(57) **Abstract**

A locking mechanism 101 for locking a system, the locking mechanism comprising a locking member 110 moveable in an axial direction A between a first position and a second position. The locking mechanism is able to lock the system when the locking member is in the first position and not to lock the system when the locking member is in the second position. The locking mechanism comprises an actuator 120 for moving the locking member between the first position and the second position, and a housing 130 that houses the locking member and the actuator. The actuator comprises a piston 121 that is static relative to the housing and a cylinder 122 that is moveable relative to the housing, and the cylinder forms at least a part of the locking member. The locking mechanism is configured to lock the system by absorbing bending forces F applied to the locking member by the system when the locking member is in the first position.

## Description

The present disclosure relates to a locking mechanism, a system to be locked by a locking mechanism and a method of locking such a system. In particular, the disclosure relates to the aerospace industry.

Locking mechanisms are known in the art. For example, in the aerospace industry, locking members are conventionally used to lock two members together such that they cannot move relative to each other. The locking mechanism can be withdrawn such that the two members can move relative to each other.

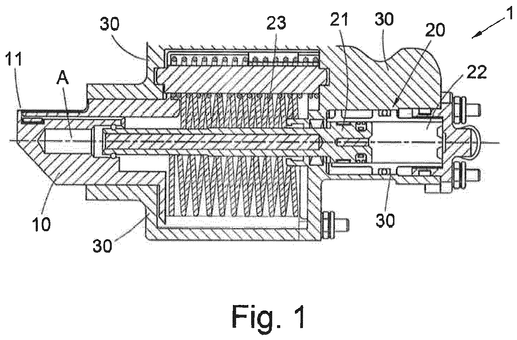

An example of a conventional locking mechanism is shown in Figure 1. Using this locking mechanism 1, two members of a system are locked together by the locking mechanism 1 absorbing (or reacting to) bending forces occurring on the first end 11 of the locking member 10.

The locking mechanism 1 comprises a locking member 10, which is typically referred to as a lock blade. The lock blade 10 defines an axial direction A.

The locking mechanism 1 comprises an actuator 20. The actuator 20 comprises a piston 21 and a cylinder 22. The cylinder 22 is fixed to a first member of the system (not shown). The piston 21 may move relative to the cylinder 22 and hence the first member. The piston 21 is attached to the lock blade 10.

The locking mechanism 1 comprises a housing 30 that houses the locking member 10 and the actuator 20.

The lock blade 10 is moveable between a first position (shown in Figure 1), where a first end 11 of the lock blade 10 extends outside of the housing 30, and a second position (not shown), where the first end 11 is retracted toward the cylinder 22 in the axial direction along the axis A.

The actuator 20 further comprises a spring 23 that biases the lock blade 10 to the first position, which is its locking position (as shown in Figure 1). To move the lock blade 10 to the second (unlocking position), hydraulic fluid is supplied to and/or removed from the cylinder 22. This in turn moves the piston 21, which in turn moves the locking member 10.

When the locking mechanism 1 is locking the first and second members together, the second member may comprise a feature (such as a recess) which can cooperate with the first end 11 of the lock blade 10 so as to prevent movement of the second member relative to the first member.

The movement of the second member that the lock blade 10 prevents is perpendicular to the axial direction A. This perpendicular movement creates a bending force on the locking member 10. In the conventional locking mechanism of Figure 1, this bending force is absorbed (or reacted) by the housing 30 only, with forces being transferred between the housing 30 and the lock blade 10, and between the housing 30, the piston 21 and the lock blade 10.

There is a desire for a more reliable and lighter-weight locking mechanism that can react to bending forces.

In another exemplary piece of prior art, US 5427329, there is disclosed a locking mechanism where a cylinder is moveable relative to a fixed piston (rather than the piston being moveable relative to the fixed cylinder, as discussed in relation to Figure 1 of this application). However, US 5427329 is not a locking mechanism capable of absorbing (or reacting to) bending forces. Rather, it teaches a locking mechanism where the locking member 21 locks two static members 28, 30 to one moveable member 26 (see Figure 8 of US 5427329) using a double-shear mechanism (i.e. there is a shear force between 26 and 28 and another shear force between 26 and 30). There is no bending force that is absorbed (or reacted) by the housing 38 of the locking mechanism; rather, all the force of the moveable member 26 is reacted by the static members 28, 30 in a double-shear arrangement.

In a first aspect, the present invention comprises a locking mechanism for locking a system, the locking mechanism comprising: a locking member moveable in an axial direction between a first position and a second position, the locking mechanism being able to lock the system when the locking member is in the first position and not to lock the system when the locking member is in the second position; an actuator for moving the locking member between the first position and the second position; and a housing that houses the locking member and the actuator, characterised in that: the actuator comprises a piston that is static relative to the housing and a cylinder that is moveable relative to the housing; the cylinder forms at least a part of the locking member; and the locking mechanism is configured to lock the system by absorbing bending forces applied to the locking member by the system when the locking member is in the first position.

The locking member may have a hollow prismatic form.

The locking member and the cylinder may be formed by a common tube with walls of the cylinder extending to form walls of the locking member.

The locking mechanism may be configured such that at least some of the bending forces applied to the locking member are passed from the locking member to the housing.

The locking mechanism may comprise a first bearing located between the locking member and the housing, wherein the bending forces applied to the locking member are at least partially transferred to the housing through the first bearing.

The housing may comprise the first bearing and a housing member extending in the axial direction from a first end of the housing to a second end of the housing.

The first bearing may be the only point of contact between the housing and the locking member.

The locking mechanism may be configured such that at least some of the bending forces applied to the locking member are passed from the locking member to the piston.

The locking mechanism may comprise a second bearing located between the locking member and the piston, wherein the bending forces applied to the locking member are at least partially transferred to the piston through the second bearing.

The actuator may further comprise one or more resilient elements biasing the locking member to the first or second positions.

The locking member may be configured to be actuated by supply and removal of a fluid into the cylinder, wherein said fluid is configured to be supplied to and removed from the cylinder through one or more fluid passages in the piston.

The locking member may be configured to move between the first and second positions a distance that is less than half of the diameter of the locking member.

The locking member may also be configured to move between the first and second positions a distance that is less than half of the length of the locking member.

In another aspect, the present invention comprises a system configured to be locked, the system comprising: a first member, a second member, and a locking mechanism comprising any combination of the above-described features, wherein the locking mechanism is attached to the first member, wherein the first and second members are moveable relative to each other in a direction perpendicular to the axial direction (A), wherein the second member comprises a feature with which the locking member can cooperate when in the first position to lock the first and second members, and wherein the locking member does not cooperate with the feature of the second member when in the second position such that the first and second members are not locked.

In another aspect, the present invention comprises a method of locking a system using the locking mechanism comprising any combination of the above-described features, wherein the system comprises a first member and a second member, wherein the first and second members are moveable relative to each other in a direction perpendicular to the axial direction, wherein the locking mechanism is fixed to the first member, wherein the second member comprises a feature with which the locking member can cooperate when in the first position to lock the first and second members, the method comprising locking the first and second members using the locking mechanism.

The method may comprise actuating the actuator to move the locking member into the second position and hence unlocking the first and second members.

Certain embodiments of the disclosure will now be described by way of example only and with reference to the accompanying drawings in which:
Figure 1 shows an exemplary prior art locking mechanism.
Figure 2 shows an exemplary embodiment of the present locking mechanism in a first position.
Figure 3 shows the locking mechanism of Figure 2 in a second position (note that not all components of Figures 2 and 3 are to the same scale).
Figure 4 is an isometric view of an embodiment of the present invention.

As mentioned above, in a first aspect, the present disclosure relates to a locking mechanism for locking a system. The locking mechanism comprises a locking member moveable in an axial direction between a first position and a second position, the locking mechanism being configured to lock the system when the locking member is in the first position and not to lock the system when the locking member is in the second position. The locking mechanism further comprises an actuator, for moving the locking member between the first position and the second position, and a housing that houses the locking member and the actuator. The locking mechanism is characterised in that: the actuator comprises a piston that is static relative to the housing and a cylinder that is moveable relative to the housing; the cylinder forms at least a part of the locking member; and the locking mechanism is configured to lock the system by absorbing bending forces applied to the locking member by the system when the locking member is in the first position.

The present locking system provides a locking mechanism for absorbing bending loads that is lighter in weight than conventional locking mechanisms for absorbing bending loads (such as the locking mechanism of Figure 1). This is achieved by using the cylinder of the actuator as the locking member, rather than using the piston and/or a "lock blade" coupled to the piston as in the prior art.

The inventor found that when considering bending forces on locking members, a tube-like locking member exhibits greater strength per unit mass than a conventional solid locking member (such as that described in relation to the Figure 1 prior art above). The inventor therefore sought to use a tube-like locking member, since such a locking member can handle greater bending forces than a solid locking member with the same mass (or can have a lower mass in comparison to a solid locking member with the same ability to handle bending forces).

To further reduce weight, the inventor also found that the conventional piston-and-cylinder arrangement could be improved upon such that the new tube-like locking member could be used as an integral part of the actuator. The conventional locking mechanism comprises four major separate components: the housing, the cylinder, the piston and the lock blade. In contrast, the present locking mechanism comprises only three: the housing, the piston and the locking member (which also acts as the cylinder).

In order to achieve this reduction in the number of separate components, in comparison to the conventional locking mechanism, the inventor found that the piston could be stationary, i.e. fixed relative to the housing, whilst the cylinder (i.e. the locking member) moves relative to the housing.

Further, due to the fact that the locking member is lighter in weight, a resilient element of the present locking mechanism that biases the locking member toward a first or second position (i.e. locked or unlocked) acts on a lesser mass than the resilient element of a conventional locking mechanism. One function of the resilient element is to retain this mass in place, even if there are acceleration forces applied due to vibrations or shock loading. A lesser mass requires less force to prevent movement for a given level of acceleration. This means that less force is required to be produced by the resilient member, and thus less force is required by the actuator in order to overcome the bias force of the resilient member and move the locking member. Thus, the resilient member (such as a spring) can be smaller in size (and hence weight), and the actuator may also be smaller in size and weight. This further reduces the overall size and weight of the locking mechanism.

Also, because the present actuator is required to handle less force, the reliability of the locking mechanism can be improved over conventional locking mechanisms.

As mentioned above, US 5427329 may disclose a locking mechanism where the cylinder of an actuator is used as a locking member. However, the locking member of US 5427329 is arranged solely in a double-shear capacity. It experiences a double shear force when locking the members 26, 28, 30 with each other. It does not experience any bending force/moment. The features and design requirements/motivations of the double shear-type locking mechanism of US 5427329 therefore differ radically from a bending-type locking mechanism, such as the present locking mechanism and the locking mechanism of Figure 1. These differences are explained further in following description.

The locking member may be moveable relative to the housing and the piston. The piston may be static relative to the housing.

The axial direction is defined by the axial direction of the cylinder. The cylinder may comprise a central longitudinal axis, and this may define the axial direction. The locking member may be moveable only in the axial direction.

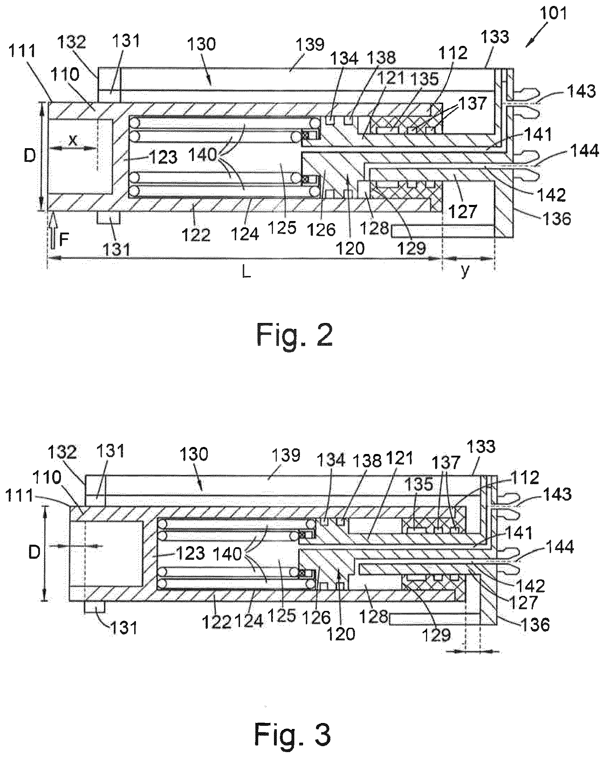

The first position may be an extended position, as shown in Figure 2, where a first end of the locking member extends beyond the housing such that the first end of the locking member may engage with a member to be locked. The first position may be the position of the locking member in its maximum state of extension.

The second position may be a retracted position, as shown in Figure 3, where the first end of the locking member is retracted toward the housing in comparison with the first position. The first end may be retracted within the housing, such that the locking member does not protrude out of the housing; however, this does not need to be the case. The second position may be the position of the locking member in its maximum state of retraction.

The locking member may comprise a first end that may extend from the housing and cooperate with a member to be locked and a second end within the housing opposite the first end.

The locking mechanism is able to lock the system when the locking member is in the first position and is able not to lock the system when the locking member is in the second position.

By "to lock", it may mean that a movement of the system is stopped or restrained. This movement may be perpendicular to the axial direction as discussed below.

By "not to lock", it is meant that the system is unlocked such that a motion of the system, which would otherwise be prevented if the locking mechanism were locking the system, is allowed.

The housing of the present locking mechanism is an integral part of the locking mechanism that is integrally attached to the actuator. The housing and the actuator form the locking mechanism), which can be attached to a suitable member. The locking mechanism can then be used to lock said suitable member with another suitable member in proximity. It is not intended for either of said members to be covered by the term "housing"; instead the "housing" is a part of the integral locking mechanism.

The piston and the cylinder may cooperate with one another in a piston-and-cylinder actuator arrangement, i.e. where fluid can be supplied to and removed from the cylinder to cause movement of the cylinder relative to the piston (and hence cause actuation of the locking member). The cylinder typically has a cylindrical shape, i.e. has the form of a circular tube, although it will be appreciated that other forms are possible, such as an elliptical cylinder bore.

The locking member may comprise the cylinder. The cylinder may form all of, or a majority of, the locking member. The locking member may be generally tubular and hence has a hollow prismatic form, such as a circular tube. At least part of the tube of the locking member may be used as the cylinder of the actuator. Thus, the locking member and the cylinder may be formed by a common tube with walls of the cylinder extending to form walls of the locking member. The tube may comprise a wall having a thickness. This thickness may be substantially uniform along the length of the locking member, or may vary. The diameter of the locking element may be in the range 2 mm to 10 mm, for example about 5 mm. It may have an axial extent of perhaps 30-100 mm, for example about 50 mm. The locking member may be formed of steel, the locking member may also be locally hardened to protect against wear.

The cross-section of the cylinder (and hence the locking member) may be circular in shape; however, it may be any other shape, provided that an adequate seal can be maintained for the cylinder and piston arrangement.

The cylinder may extend from a cylinder head, which is proximate or at the first end of the locking member, toward the second end of the locking member. The cylinder may house at least some of the piston. The cylinder head may be or may comprise a surface that is generally perpendicular to the axial direction and that extends between the walls of the cylinder so as to close the cylinder. A first chamber may be formed between the cylinder head and the piston head.

The cylinder may comprise a cylinder base. The base may be at the opposite end of the cylinder to the piston head. The cylinder base may be or may comprise a surface that is generally perpendicular to the axial direction and that extends between the walls of the cylinder so as to close the cylinder. A second chamber may be formed between the cylinder base and the piston head. The cylinder base may be located at or proximate the second end of the locking member.

The cylinder may form only part of the locking member, such that the cylinder head is spaced from the first end of the locking member. The inventor found that it is not necessary to have the cylinder head at the very end of the locking member, and it can actually be beneficial for the cylinder head not to be located at the very end of the locking member. Doing so can provide an optimal size of the cylinder, without unduly sacrificing mechanical bending properties of the locking member.

Thus, the first end of the locking member may be open, like an open tube. However, it may also be closed, if the cylinder head is placed at the very end of the locking member for example.

The locking mechanism is able to lock the system by absorbing bending forces applied to the locking member by the system when the locking member is in the first position. By "absorbing" is meant that the locking mechanism is able to provide suitable reactionary forces to any bending forces exerted on the locking member when the locking member is in its first position and acting to lock two members together. These bending forces may be approximately 2000 Ibft (271 Nm), or higher.

The locking mechanism may be configured such that at least some of the bending forces applied to the locking member are passed from the locking member to the housing. This may mean at least some of the bending forces are passed to the housing from the locking member directly (i.e. through no other major component of the locking mechanism, such as the piston; however, as mentioned below a component such as a bearing may be used to transfer the force directly from the locking member to the housing). The present locking mechanism may further comprise a first bearing located between the locking member and the housing, wherein the bending forces applied to the locking member are at least partially transferred to the housing through the first bearing. There may be only one such bearing between the locking member and the housing. However, there may also be more than one.

The housing may comprise an opening through which the locking member may pass. The opening may be located at or proximate to a first end of the housing. The first end of the housing may be the end of the housing nearest the first end of the locking member when said locking member is in the first position. The housing may comprise a second end opposite the first end, which may be attached to the piston or to one of the members to be locked.

The first bearing may be located at or proximate to the first end of the housing. The first bearing may define the opening in the housing. It may be beneficial to have the bearing as near as possible to the first end of the locking member so as to reduce the bending forces.

The bearing between the housing and the locking member (i.e. the first bearing) may be the only bearing open to the environment.

The present locking mechanism may be configured such that at least some of the bending forces applied to the locking member are passed from the locking member to the piston. This may allow for at least some of the bending forces to be passed to the piston from the locking member directly (i.e. through no other major component of the locking mechanism, such as the housing; however, as mentioned below a component such as a bearing may be used to transfer the force directly from the locking member to the piston). By contrast, in the conventional locking mechanism of Figure 1, this bending force is absorbed (or reacted) by the housing 30 only, with forces being transferred between the housing 30 and the lock blade 10 , and the housing 30, the piston 21 and the lock blade 10.

The present locking mechanism may further comprise a second bearing located between the locking member and the piston, wherein the bending forces applied to the locking member are at least partially transferred to the piston through the second bearing.

The piston may comprise a piston head that forms a seal with the inside surface of the cylinder. The piston may comprise a piston rod which extends through the base of the cylinder and connects to the piston head. The rod may be connected to a base of the piston that is outside of the cylinder. The base of the cylinder and the piston rod may be arranged such that substantially no fluid can pass from the interior of the chamber out of the base of the cylinder between the piston rod and the cylinder base. For instance, they may be arranged in a sealed relationship with one another.

There may be only one such bearing between the piston and the locking member. However, there may be more than one, such as (only) two.

There may be at least one bearing between the inside surface of the cylinder and the piston head; and/or there may be at least one bearing between the piston rod and the base of the cylinder. There may be only one bearing between the inside surface of the cylinder and the piston head, and/or there may be only one bearing between the piston rod and the base of the cylinder.

Having such an arrangement for reacting to the bending forces is beneficial for the following reasons. Using the fixed piston to absorb (or react to) some of the bending forces allows for a light-weight housing to be used (since the housing local to the end nearest the locking element then only needs to absorb (or react to) some of the bending forces, the remaining bending forces are passed through the piston). Having a light-weight housing can be of great benefit as weight is further reduced, there may be smaller contact areas between the housing and the locking member (which in turn can reduce ice adhesion between the housing and the locking member, which may be relevant in an aerospace setting), and there may be more room for water/contaminants to drain from the locking mechanism, whilst only one bearing (the first bearing) may be open to the environment.

The housing may comprise (or consist of) the first bearing and a housing member extending in the axial direction from the first end of the housing to the second end of the housing. The first bearing may be the only point of contact between the housing and the locking member. The housing member may be an elongated member or beam that supports the first bearing. The housing member may not be tubular and may not completely surround the actuator and locking member, as is known in the conventional locking mechanism of Figure 1.

This housing may therefore be quite minimal in comparison with conventional housing for locking mechanisms, which in turn allows for weight reduction of the lock mechanism. The present locking mechanism allows for such a light-weight housing since the piston may absorb some of the forces, and so the housing does not need to absorb all of the forces.

The actuator further comprises one or more resilient elements biasing the locking member to the first or second positions. The one or more resilient elements may bias the locking member to the first position, such that the locking mechanism is naturally in the locking state. The resilient element(s) may provide the locking mechanism with a natural bias to one of the first and second positions.

The one or more resilient elements may be one or more springs.

The one or more resilient elements may extend between the cylinder and the piston. For instance, it/they may extend from the cylinder head to the piston head, and/or from the cylinder base to the piston head.

There may be a plurality of resilient elements. Each may extend between the piston head and the cylinder head.

Using a resilient bias provides a simple and light-weight biasing mechanism for the actuator. It can be light-weight due to the reduced weight of the components being biased (because of the tubular nature of the locking member and the fact the locking member comprises the cylinder of the actuator, as discussed above). Further, since the biasing mechanism is biasing lighter-weight components, it only needs to provide a smaller force than would conventionally be required. This in turn means that the actuator only needs to overcome a smaller force than would conventionally be required, which in turn means that a lighter-weight actuator with lower fluid pressure is required.

Thus, there is a form of "positive feedback" with the present locking mechanism design, whereby the lighter-weight locking member means a lighter-weight spring can be used, which in turn means a lighter-weight actuator can be used.

The locking member may be configured to be actuated by supply and removal of a fluid into the cylinder, wherein said fluid is configured to be supplied to and removed from the cylinder through one or more fluid passages in the piston.

As mentioned above, the piston may divide the cylinder into a first chamber and a second chamber. The piston may comprise a first fluid passage in fluid communication with the first chamber and a second fluid passage in fluid communication with the second chamber.

The first fluid passage may extend through the piston rod and the piston head to the first chamber. The second fluid passage may extend through the piston rod (only) to the second chamber.

The one or more fluid passages may be arranged to be connected to respective fluid sources.

To move the locking member away from the first position (which may be working against the natural bias of the locking mechanism), high pressure fluid is supplied to the second chamber through the second fluid passage and lower pressure fluid is allowed to leave the first chamber through the first fluid passage.

To move the locking member toward the first position, the supply of high pressure fluid to the second chamber may be reduced (or ceased), allowing the natural bias of the locking mechanism (e.g. due to the resilient elements) to return the locking member to the first position.

The actuator may be a hydraulic actuator. The fluid may be a hydraulic fluid.

The locking member may extend beyond the housing by less than the diameter of the locking member when in the first position. This may allow the bending forces to be more easily reacted by the housing and/or the piston, which in turn allows the locking member to be lighter-weight.

Thus, it may be that the distance between the first end of the locking member and the first bearing is less than the diameter of the locking member, when the locking member is in the first position.

The locking member may move between the first and second positions by a distance that is less than the diameter of the locking member.

It may be less than the diameter, or less than 0.75 (three quarters) of the diameter, or less than 0.5 (half) of the diameter.

The diameter may be the outer diameter.

The locking member may extend beyond the housing by less than 0.5 of the total length of the locking member when in the first position. This may allow the bending forces to be more easily reacted by the housing and/or the piston, which in turn allows the locking member to be lighter-weight.

Thus, it may be that the distance between the first end of the locking member and the first bearing is less than 0.5 of the length of the locking member.

The locking member may move between the first and second positions by a distance that is less than 0.5 of the length of the locking member.

It may be 0.5 of the length, or less than 0.4 of the length, or less than 0.3 of the length, or less than 0.2 of the length, or less than 0.1 of the length.

The length may be the distance from the first end to the second end of the locking member.

There may therefore be more of the locking member inside the housing than outside the housing (e.g. beyond the first bearing), when the locking member is in the first position.

The locking mechanism may be for use in an aerospace setting, such as on an aircraft. The locking mechanism may be attachable to a first member, which is part of an aircraft. The locking mechanism may be able to lock a second member, which is part of the same aircraft, stationary relative to the first member (especially when the first and second members are capable of movement (substantially) perpendicular to the axial direction of the locking member). For example, the locking mechanism may be for locking a thrust reverser stationary relative to the remainder of the airplane/engine. This may be done by locking a latch for said thrust reverser. The locking device may be a secondary lock for use in an aircraft.

In a second aspect, provided is a system configured to be optionally locked. The system comprises a first member, a second member, and a locking mechanism as described in the first aspect. The locking mechanism is attached to the first member. The first and second members are moveable relative to each other in a direction perpendicular to the axial direction. The second member comprises a feature (such as a recess) with which the locking member can cooperate when in the first position to lock the first and second members. The locking member does not interact with the second member when in the second position such that the first and second members are not locked.

It may be the housing and/or the base of the piston that is attached to the first member.

The first member may be a stationary component on an aircraft, such as a part of the aircraft superstructure, such as an airframe, or an engine, or a cowling. The second member may be a component that is moveable relative to the first component (such as a pivoting thrust reverser) or the latch for a component that is moveable relative to the first component. When the locking mechanism is used to ensure a latch (or other primary lock) does not move, it can be described as a secondary lock.

In a third aspect, provided is a method of locking a system using the locking mechanism of the first aspect, wherein the system comprises a first member and a second member, wherein the first and second members are moveable relative to each other in a direction perpendicular to the axial direction, wherein the locking mechanism is fixed to the first member, wherein the second member comprises a feature (such as a recess) with which the locking member can cooperate when in the first position to lock the first and second members, the method comprising locking the first and second members using the locking mechanism.

The system may be the system of the second aspect.

The locking mechanism may be the locking mechanism of the first aspect.

The method may comprise actuating the actuator to move the locking mechanism into the second position and hence unlocking the first and second members. This may be achieved by supplying higher pressure fluid into the second chamber and allowing lower pressure fluid to leave the first chamber. This high-pressure fluid may overcome the biasing force that may be present (i.e. the force biasing the locking mechanism toward the first position, e.g. by the resilient element(s)).

The method may comprise actuating the actuator to move the locking mechanism into the first position and hence locking the first and second members together. This may be achieved by allowing high pressure fluid to leave the second chamber, allowing lower pressure fluid to enter the first chamber, and allowing the at least one resilient element to move the locking member to the first position.

Regarding Figures 2 and 3, shown is an exemplary embodiment of the present locking mechanism 101. The locking mechanism 101 comprises a locking member 110 moveable in the axial direction A between a first extended position (as shown in Figure 2) and a second retracted position (shown in Figure 3). The locking mechanism 101 further comprises an actuator 120 for moving the locking member 110 between the first position and the second position, and a housing 130 that houses the locking member 110 and the actuator 120. The actuator 120 comprises a piston 121 that is static relative to the housing 130 and a cylinder 122 that is moveable relative to the housing 130. The cylinder 122 forms a part of the locking member 110. The locking mechanism 101 is configured to absorb bending forces F applied to the locking member 110 when the locking member 110 is in the first position.

The locking member 110 is moveable relative to the housing 130 and the piston 121. The piston 121 is static relative to the housing 130.

The locking member 110 comprises a first end 111 that extends from the housing 130 and cooperates with a member to be locked. The locking member 110 comprises a second end 112 opposite the first end 111.

The housing 130 is an integral part of the locking mechanism that is integrally attached to the actuator 120. The housing 130 and the actuator 120 form an integral piece (the locking mechanism 101), that can be attached to a suitable member to be locked. The locking mechanism 101 can then be used to lock said suitable member to another suitable member in proximity.

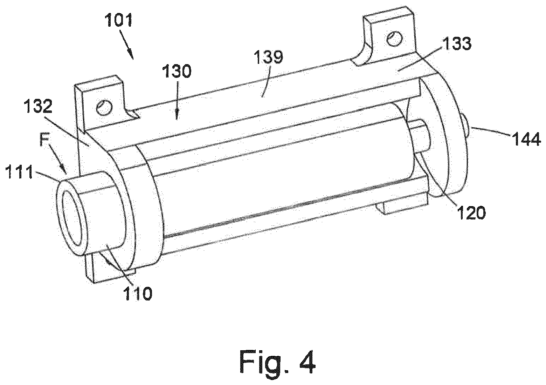

The locking member 110 is generally tubular or hollow, as shown in the isometric view of Figure 4. Part of the tube of the locking member 110 is used as the cylinder 122 of the actuator 120. The locking member may be cylindrical in shape.

The cylinder 122 extends from a cylinder head 123, which is proximate the first end 111 of the locking member 110, toward the second end 112 of the locking member 110. The cylinder 122 houses at least some of the piston 120. The cylinder head 123 comprises a surface that is generally perpendicular to the axial direction A and that extends between the inside walls 124 of the cylinder so as to close the cylinder 122. A first chamber 125 is formed between the cylinder head 123 and the piston head 126.

The cylinder 122 comprises a cylinder base 129. The base 129 is at the opposite end of the cylinder 122 to the cylinder head 123. The cylinder base 129 comprises a surface that is generally perpendicular to the axial direction A and that extends between the walls 124 of the cylinder so as to close the cylinder 122. A second chamber 128 is formed between the cylinder base 129 and the piston head 126. The cylinder base 129 is located proximate the second end 112 of the locking member 110.

In the embodiment shown in Figures 2 and 3, the cylinder 122 forms only part of the locking member 110, such that the cylinder head 123 is spaced from the first end of the locking member 111. Thus, the first end 111 of the locking member 110 is open.

The locking mechanism 101 is able to lock a system by absorbing bending forces F applied to the locking member 110 by the system when the locking member 110 is in the first position.

The locking mechanism 101 is configured such that some of the bending forces F applied to the locking member 110 are passed from the locking member 110 to the housing 130 directly. The remaining bending forces F are reacted by the piston 121 directly.

A first bearing 131 is located between the locking member 110 and the housing 130. A part of the bending forces F applied to the locking member 110 are transferred to the housing 110 through the first bearing 131. The bearing 131 forms an opening in the housing 130 through which the locking member 110 passes. The opening is located at a first end of the housing 132. The housing 130 comprises a second end 133 opposite the first end 132, which is attached to the piston 121.

The remaining bending forces F not reacted by the housing 130 are passed from the locking member 110 to the piston 121 directly. Second bearings 134, 135 are located between the locking member 110 and the piston 121. There are two second bearings 134, 135 present. One bearing 134 is present between the inside surface of the cylinder 124 and the piston head 126; and another bearing 135 is present between the piston rod 127 and the base of the cylinder 129. The bending forces F applied to the locking member 110 are partially transferred to the piston 121 through the second bearing 134, 135.

The piston 121 comprises a piston head 126 that forms a seal with the inside surface 124 of the cylinder 122. The piston head 126 is sealed to the inside surface 124 by means of a seal 138. The seal 138 keeps the chambers 125, 128 separate from each other.

The piston 121 comprises a piston rod 127 which extends through the base 129 of the cylinder 122 and connects to the piston head 126. The rod 127 is connected to a base of the piston 136 that is outside of the cylinder 122.

The base 129 of the cylinder 122 and the piston rod 127 are arranged such that substantially no fluid can pass from the interior of the cylinder 122 out of the base 129 of the cylinder 122 between the piston rod 127 and the cylinder base 129. For instance, they may be arranged in a sealed relationship with one another. This seal may be formed using one or more seals 137.

The housing 130 consists of the first bearing 131 and an elongated member 139 extending in the axial direction A from the first end 132 of the housing to the second end 133 of the housing 130. The first bearing 131 is the only point of contact between the housing 130 and the locking member 110. The housing 130 may therefore be open, i.e. it may not completely enclose the locking cylinder 122 and piston 121. Rather, the elongated member 139 may effectively suspend the bearing ring 131 to support the locking member 110.

The actuator 120 further comprises a plurality of springs 140 biasing the locking member 110 to the first position. Each spring 140 extends between the cylinder head 123 and the piston head 126.

The locking member 110 is actuated by supply and removal of a fluid into the cylinder 122. Said fluid is configured to be supplied to and removed from the cylinder 122 through fluid passages 141, 142 in the piston 121. The piston 121 comprises a first fluid passage 141 in fluid communication with the first chamber 125 and a second fluid passage 142 in fluid communication with the second chamber 128.

The first fluid passage 141 extends through the piston rod 127 and the piston head 126 to the first chamber 125. The second fluid passage 142 extends through the piston rod 127 only (and not the piston head 126) to the second chamber 128.

The fluid passages 141, 142 are arranged to be connected to respective fluid sources (not shown) at ports 143, 144.

To move the locking member 110 away from the first position, high pressure fluid is supplied to the second chamber 128 through the second fluid passage 142 and lower pressure fluid is allowed to leave the first chamber 125 through the first fluid passage 141.

To move the locking member 110 toward the first position, the supply of high pressure fluid to the second chamber 128 may be reduced (or ceased), allowing the natural bias of the locking mechanism 101 (e.g. due to the springs 140) to return the locking member 110 to the first position. When this occurs, fluid is removed from the second chamber 128 and fluid is added to the first chamber 125.

The locking member 110 extends beyond the housing 10 by a distance X when in the first position. X is less than the diameter D of the locking member 110.

The locking member 110 moves between the first and second positions by a distance Y. The distance Y is less than the diameter D of the locking member 110.

The locking member 110 extends beyond the housing by a distance X that is less than 0.5 of the total length L of the locking member 110 when in the first position.

The locking member 110 moves between the first and second positions by a distance Y that is less than 0.5 of the length L of the locking member 110.

The distances X and Y may be substantially equal to each other, or they may be different.

When a force F is applied to the first end 111 of the locking member, the first bearing 131 may provide a reactionary force in a direction opposite to the direction of F. However, due to the fact the first bearing 131 is offset from the first end 111 of the locking member 110, the first bearing 131 acts as a pivot. The bearing(s) 134, 135 therefore provides a reactionary force in the same direction as F.

## Claims

1. A locking mechanism (101) for locking a system, the locking mechanism (101) comprising:
a locking member (110) moveable in an axial direction (A) between a first position and a second position, the locking mechanism (101) being able to lock the system when the locking member (110) is in the first position and not to lock the system when the locking member (110) is in the second position;
an actuator (120) for moving the locking member (110) between the first position and the second position; and
a housing (130) that houses the locking member (110) and the actuator (120), **characterised in that**:
the actuator (120) comprises a piston (121) that is static relative to the housing (130) and a cylinder (122) that is moveable relative to the housing (130);
the cylinder (122) forms at least a part of the locking member (110); and
the locking mechanism (101) is configured to lock the system by absorbing bending forces (F) applied to the locking member (110) by the system when the locking member (110) is in the first position.

2. A locking mechanism as claimed in claim 1, wherein the locking member (110) has a hollow prismatic form.

3. A locking mechanism as claimed in claim 1 or 2, wherein the locking member (110) and the cylinder (122) are formed by a common tube with walls of the cylinder extending to form walls of the locking member.

4. A locking mechanism as claimed in claim 1, 2 or 3, wherein the locking mechanism (101) is configured such that at least some of the bending forces (F) applied to the locking member (110) are passed from the locking member to the housing (130).

5. A locking mechanism as claimed in claim 4, comprising a first bearing (131) located between the locking member (110) and the housing (130), wherein the bending forces (F) applied to the locking member (110) are at least partially transferred to the housing (130) through the first bearing (131).

6. A locking mechanism as claimed in claim 5, wherein the housing (130) comprises the first bearing (131) and a housing member (139) extending in the axial direction (A) from a first end of the housing (132) to a second end of the housing (133).

7. A locking mechanism as claimed in claim 6, wherein the first bearing (131) is the only point of contact between the housing (130) and the locking member (110).

8. A locking mechanism as claimed in any preceding claim, wherein the locking mechanism (101) is configured such that at least some of the bending forces (F) applied to the locking member (110) are passed from the locking member (110) to the piston (121).

9. A locking mechanism as claimed in claim 8, comprising a second bearing (134, 135) located between the locking member (110) and the piston (121), wherein the bending forces (F) applied to the locking member (110) are at least partially transferred to the piston (121) through the second bearing (134, 135).

10. A locking mechanism as claimed in any preceding claim, the actuator (120) further comprising one or more resilient elements (140) biasing the locking member (110) to the first or second positions.

11. A locking mechanism as claimed in any preceding claim, wherein the locking member (110) is configured to be actuated by supply and removal of a fluid into the cylinder (122), wherein said fluid is configured to be supplied to and removed from the cylinder (122) through one or more fluid passages in the piston (141, 142).

12. A locking mechanism as claimed in any preceding claim, wherein the locking member (110) is configured to move between the first and second positions a distance (Y) that is less than half of the diameter (D) of the locking member (110) and/or wherein the locking member (110) is configured to move between the first and second positions a distance (Y) that is less than half of the length (L) of the locking member (110).

13. A system configured to be locked, the system comprising:
a first member,
a second member, and
a locking mechanism (101) as claimed in any preceding claim,
wherein the locking mechanism (101) is attached to the first member, wherein the first and second members are moveable relative to each other in a direction perpendicular to the axial direction (A), wherein the second member comprises a feature with which the locking member (110) can cooperate when in the first position to lock the first and second members, and wherein the locking member (110) does not cooperate with the feature of the second member when in the second position such that the first and second members are not locked.

14. A method of locking a system using the locking mechanism (101) claimed in any of claims 1 to 12, wherein the system comprises a first member and a second member, wherein the first and second members are moveable relative to each other in a direction perpendicular to the axial direction (A), wherein the locking mechanism (101) is fixed to the first member, and wherein the second member comprises a feature with which the locking member (110) can cooperate when in the first position to lock the first and second members,
the method comprising locking the first and second members using the locking
mechanism (101).

15. A method as claimed in claim 14, comprising actuating the actuator (120) to move the locking member (110) into the second position and hence unlocking the first and second members.
